# EUROPÄISCHE PATENTANMELDUNG

(11) **EP 0 728 823 A2**
(43) Veröffentlichungstag der Anmeldung: **28.08.1996**
(21) Anmeldenummer: 96100494.2
(22) Anmeldetag: 15.01.1996
(51) Int. Cl.: C09J 7/02

(54) **Verbundklebeband zum lückenlosen Verbinden von Etikettenbändern**

(30) Priorität: 20.02.1995 DE 29502784 U
(71) Anmelder: Jetter, Ralf, 83646 Bad Tölz (DE)
(72) Erfinder: Jetter, Ralf, 83646 Bad Tölz (DE)
(74) Vertreter: Dr. Elisabeth Jung Dr. Jürgen Schirdewahn Dipl.-Ing. Claus Gernhardt

(57) **Zusammenfassung**

Die Erfindung betrifft ein Verbundklebeband zur Fixierung eines mit selbstklebenden Etiketten beschichteten Bandes auf dem Rollenkern, welches durch einen geschichteten Aufbau gekennzeichnet ist, und das als eine "potentielle Verbindungsstelle" dient, mit Hilfe derer das Ende eines (nahezu) verbrauchten Etikettenbandes nach dem Einsetzen eines neuen Klebebandes in eine Etikettiermaschine lückenlos unmittelbar mit der dehäsiven Oberseite des Anfangsbereichs eines neu eingesetzten Etikettenbandes verbunden werden kann, ohne daß es erforderlich ist, entsprechend dem Stand der Technik die Verbindung in zeitraubender und störungsanfälliger Weise per Hand durchzuführen. Da die Verbindung der beiden Etikettenbänder lückenlos erfolgen kann, realisiert die Steuerungseinrichtung der Etikettiermaschine die Verbindungsstelle weder als Zäsur noch als Defekt des Bandes, sondern es wird nach der erneuten Inbetriebnahme der Maschine ein praktisch kontinuierlicher, weiterer Ablauf der Etikettierungsvorgänge gewährleistet.

## Beschreibung

Vollautomatische Etikettiermaschinen für die Verarbeitung selbstklebender Etiketten finden seit Jahren in der chemischen Industrie, der pharmazeutischen Industrie und zahllosen anderen Bereichen der verarbeitenden Industrie Verwendung, wobei grundsätzlich die Funktionsweise solcher Etikettiermaschinen in allen Fällen vergleichbar ist. Stets wird ein an einem Rollenkern fixiertes, auf seiner dehäsiven (=klebstoffabweisenden) Oberseite mit selbstklebenden Haftetiketten beschichtetes Band mit regelbarer und kontrollierter Geschwindigkeit von dem Rollenkern abgespult und mittels einer Führungseinrichtung über eine scharfe Spendekante geführt, an welcher in mit dem Lauf des Bandes synchronisierter Weise die zu etikettierenden Gegenstände vorbeigeführt und somit vollautomatisch mit konstanter, geregelter Frequenz etikettiert werden.

Gebräuchliche Etikettenbänder, die von derartigen Etikettiermaschinen verarbeitet werden, enthalten üblicherweise mehrere tausend Einzeletiketten, die allerdings in Anbetracht der üblichen Verarbeitungsgeschwindigkeiten in wenigen Stunden, häufig sogar in weniger als einer Stunde verarbeitet werden. Wenn das Etikettenband verbraucht und somit vollständig vom Rollenkern abgewickelt worden ist, wird das mittels eines Tesabandes® über die Bandoberseite am Rollenkern befestigte Ende des Bandes von dem besagten Rollenkern abgetrennt und die Maschine wird, in der Regel vollautomatisch, sofort gestoppt. Anschließend muß jeweils von Hand der Rollenkern des (nahezu) verbrauchten Etikettenbandes entfernt und stattdessen eine neue Etikettenrolle eingesetzt werden. Ehe die Maschine wieder gestartet werden und reibungslos weiterarbeiten kann, ist es außerdem erforderlich, das lose Endstück des verbrauchten Bandes, welches auf dem Rollenkern fixiert war, unter Verwendung eines Tesabandes® per Hand mit dem Anfangsabschnitt der adhäsiven Unterseite des neu eingesetzten Etikettenbandes zu verbinden. Dabei ist eine genaue Justierung derart erforderlich, daß das erste Etikett des neuen Bandes möglichst im Abstand von 1-3 mm mit dem letzten Etikett des alten Bandes verbunden wird. Überstehender Tesafilm® muß an den Bandkanten abgeschnitten werden. Darüberhinaus muß die Stelle, an der die beiden Bänder verknüpft worden sind, ebenfalls von Hand mit erheblich reduzierter Maschinengeschwindigkeit über die oben erwähnte, scharfe Spendekante hinweggezogen werden, welche den eigentlichen Etikettierungsvorgang auslöst, da ansonsten die Gefahr besteht, daß die verhältnismäßig empfindlichen Steuerungseinrichtungen der Maschine diese Verbindungsstelle als Banddefekt bewerten. Dies wiederum zieht in weniger problematischen Fällen einige Fehletikettierungen nach sich, kann aber in problematischen Fällen unter Umständen sogar das automatisch ausgelöste, erneute Abschalten der Maschine zur Folge haben. Darüberhinaus besteht die weitaus größere Gefahr, daß sich das so verbundene Etikettenband beim Führen über die Spendekante trennt, was zu einem kompletten Bandabriß führt, der anschließend ein vollständiges Neueinfädeln des Bandes erfordert. Dabei muß in der Regel eine größere Anzahl von Etiketten vom Band abgezogen und verworfen werden. Eine wirksamere, *überlappenden* Verklebung der Bandenden verhindert zwar den Bandabriß, führt aber infolge der häufig nicht positionsgenauen Ausführung nicht selten zu Fehlsignalen der üblicherweise zur Maschinensteuerung eingesetzten Fotozellen. Führt man diese *überlappende* Verklebung der Bandenden indes positionsgenau aus, so erfordert dies wiederum einen erheblichen Zeitaufwand.

Zusammenfassend bleibt somit festzuhalten, daß das regelmäßig notwendige Einsetzen einer neuen Etikettenrolle in der vorstehend beschriebenen Art und Weise einerseits dem vorstehend beschriebenen, schwer auflösbaren Zielkonflikt zwischen den Anforderungen an einerseits die Genauigkeit und andererseits die Zuverlässigkeit, bzw. die problemlose Handhabbarkeit der Verbindung unterliegt, und daß andererseits eine Mindestausfallzeit der betreffenden Etikettiermaschine in der Größenordnung von einigen Minuten pro Rollenwechsel in Kauf genommen werden muß. Wenn man außerdem die gegenwärtig üblichen Verarbeitungsgeschwindigkeiten vollautomatischer Etikettiermaschinen von, unter Umständen, mehreren tausend Etiketten pro Stunde in Rechnung stellt, so summieren sich die allein durch derartige Rollenwechsel verursachten Ausfallzeiten ohne weiteres auf eine Größenordnung von insgesamt ein bis zwei Stunden pro Arbeitstag. Diese Ausfallzeiten stellen natürlich einen ausgesprochen unwirtschaftlichen Kostenfaktor dar, der die gesamte Produktion der oben angesprochenen Industriezweige, in denen vollautomatische Etikettiermaschinen zum Einsatz kommen, in unnötiger Weise verteuert und der somit auch letztlich den Endverbraucher erheblich belastet.

Die Erfindung löst diese Probleme, indem ein Verbundklebeband zur Fixierung eines mit selbstklebenden Etiketten beschichteten Bandes auf dem Rollenkern bereitgestellt wird, welches durch einen geschichteten Aufbau gekennzeichnet ist, und das als eine "potentielle Verbindungsstelle" dient, mit Hilfe derer das Ende eines (nahezu) verbrauchten Etikettenbandes nach dem Einsetzen eines neuen Klebebandes in die Etikettiermaschine lückenlos unmittelbar mit der dehäsiven Oberseite des Anfangsbereichs eines neu eingesetzten Etikettenbandes verbunden werden kann, ohne daß es erforderlich ist, die zeitraubende Verbindung mittels Tesaband® per Hand durchzuführen. Da die Verbindung der beiden Etikettenbänder somit lückenlos erfolgen kann, realisiert die Steuerungseinrichtung der Etikettiermaschine die Verbindungsstelle weder als Zäsur noch als Defekt des Bandes, sondern es wird nach der erneuten Inbetriebnahme der Maschine ein praktisch kontinuierlicher, weiterer Ablauf der Etikettierungsvorgänge gewährleistet. Somit ist es durch die Verwendung der Erfindung möglich, im Zuge eines solchen oben beschriebenen Wechsels des Etikettenbandes einerseits die dadurch verursachte, unwirtschaftliche Ausfallzeit der Etikettiermaschine zu minimalisieren und andererseits zudem den Verlust von Etiketten durch Fehletikettierungen, bzw. durch das oben beschriebene, nach dem Stand der Technik erforderliche, aufwendige Neujustieren des Bandes in Handarbeit weitgehend auszuschließen.

Die Erfindung besteht aus einem Verbundklebeband, das einen geschichteten Aufbau aufweist, im Rahmen dessen sechs verschiedene Schichten zu unterscheiden sind.

Die Erfindung wird jetzt anhand der Zeichnung näher erläutert.

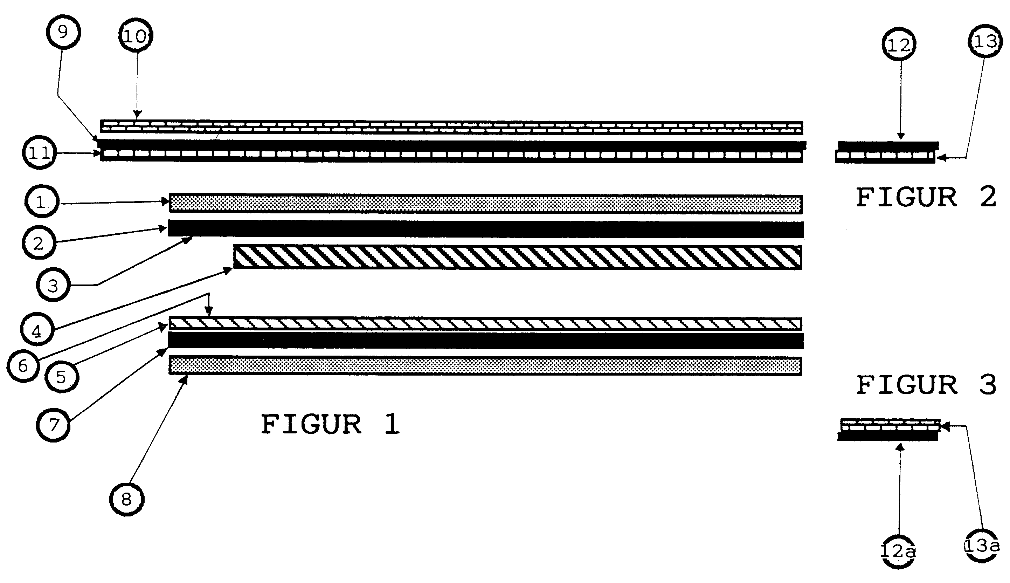

Die Figur 1 zeigt im Querschnitt eine bevorzugte Ausführungsform der Erfindung, die sechs übereinander angeordnete Schichten aufweist, und zwar eine oberste, erste Schicht (1), die aus einem nach dem Stand der Technik üblichen, permanent haftenden Klebstoff auf, z.B., Acrylat- oder Kautschukbasis besteht und welche erste Schicht (1) auf der darunter angeordneten, zweiten Schicht (2) aufgetragen ist, welche aus einer transparenten Folie aus einem nach dem Stand der Technik üblichen Gebrauchskunststoff besteht. Nach dem Stand der Technik übliche Klebstoffe, die sich zur Verwendung im Rahmen der erwähnten, ersten Schicht (1) eignen, werden beispielsweise in den nachfolgenden beiden Referenzen ausführlich beschrieben, die im weiteren Text abgekürzt als R1 und R2 bezeichnet werden:
**R1:** Ralf Jordan, *Haftklebstoffe*, Band 6a in der Reihe "Klebstoff-Monographien", Hinterwaldner-Verlag; München 1989;
**R2:** Ralf Jordan, *Schmelzhaftklebstoffe*, Band 6b in der Reihe "Klebstoff-Monographien", Hinterwaldner-Verlag; München 1990.

Hinzuweisen ist insbesondere auf das Kapitel 2 (S. 4 bis 199) von R1 sowie auf die Kapitel 2 bis 4 (S. 1 bis 126) von R2. Dort wird eine Vielzahl geläufiger Klebstoffe und Klebstoffgemische beschrieben, die vozugsweise auf Lösungen und Lösungsgemischen von üblichen Gebrauchspolymeren und/oder Gebrauchs*co*polymeren basieren, insbesondere auf Vinylpolymeren aller Art sowie auf Urethanen und/oder Silikonen, bzw. auf Derivaten derselben und/oder auf Gemischen der vorstehenden Materialien.

Die genannte, zweite Schicht (2) besteht vorzugsweise aus Polyester oder Polypropylen und ist vorzugsweise 0,01 bis 0,05 mm dick, insbesondere 0,025 mm oder 0,036 mm. Ein größerer Teil der Fläche der Unterseite dieser zweiten Schicht (2) mit Ausnahme eines Kantenbereichs (3), der wahlweise entweder freibleibt und/oder mittels einer geeigneten Abdeckung kaschiert werden kann, ist mit der dritten Schicht (4), einem Spezialklebstoff für silikonisierte Flächen beschichtet, der gleichzeitig einen entsprechenden, größeren Teil der Fläche der Oberseite einer silikonklebstoffabweisenden, vierten Schicht (5) bedeckt, mit Ausnahme eines Kantenbereichs (6), ), der wahlweise entweder freibleibt und/oder mittels einer geeigneten Abdeckung kaschiert werden kann. Somit ist entweder die Flächenausdehnung der zwischen der zweiten (2) und der vierten Schicht (5) angebrachten, dritten Schicht (4) oder der Flächenbereich, innerhalb dessen die dritte Schicht (4) von der zweiten Schicht (2) und/oder der vierten Schicht (5) kontaktiert wird, etwas kleiner als die Fläche der beiden daran anschließenden Schichten (2, 5), so daß jeweils in einer Randzone (3) der Unterseite der zweiten Schicht (2) und einer darunter angeordneten, entsprechenden Randzone (6) der Oberseite der vierten Schicht (5) ein entweder nicht von der dritten Schicht (4) bedeckter und/oder mittels einer geeigneten Abdeckung kaschierter Flächenbereich vorliegt, der als potentielle "Sollbruchstelle" zwischen der Unterseite der dritten Schicht (4) und dem davon bedeckten Teil der Oberseite der vierten Schicht (5) dient.

Die erwähnte, dritte Schicht (4) kann aus einem beliebigen, nach dem Stand der Technik üblichen Klebstoff, beispielsweise auf der Basis von Polysiloxanen bestehen, der zur Verklebung silikonbeschichteter Flächen geeignet ist. Als Basis dieser dritten Schicht (4) geeignete Silikonklebstoffe und Silikonklebstoffgemische werden ausführlich in den bereits genannten Referenzen R1 und R2 beschrieben. Vorzugsweise handelt es sich um Klebstoffe auf der Basis von Polysiloxanen und/oder üblichen Gebrauchspolymeren und/oder Gebrauchscopolymeren und/oder um Gemische derselben, wobei Klebstoffe auf der Basis von Polydimethylsiloxan und/oder Polydiphenylsiloxan besonders bevorzugt sind. Insbesondere wird in diesem Zusammenhang auf die Angaben auf den Seiten 115 bis 117 der Referenz R2 hingewiesen.

Die erwähnte, vierte Schicht (5) besteht aus irgend einem nach dem Stand der Technik üblichen, silikonklebstoffabweisenden oder nur schwach verbindenden Material, beispielsweise aus einer Folie aus einem geläufigen Gebrauchskunststoff oder einem Papier oder einem Gewebe mit strukturierter Oberfläche. Vorzugsweise wird eine Folie oder ein Papier mit einer Beschichtung auf der Basis von Polysiloxanen verwendet, wobei Polydimethylsiloxan und/oder Polydiphenylsiloxan besonders bevorzugt sind. Insbeondere wird Polydimethylsiloxan verwendet. Beispielsweise kann eine vierte Schicht (5) auf der Basis von Polydimethylsiloxan verwendet werden, wie exemplarisch in der Referenz R2 im vorletzten Absatz der Seite 117 beschrieben ist.

Die besagte, vierte Schicht (5) ist mit der Unterseite auf die Oberseite einer fünften Schicht (7) aufgebracht, welche fünfte Schicht (7) aus einer transparenten oder weißen Folie aus einem nach dem Stand der Technik üblichen Gebrauchskunststoff oder einem Papier oder einem Gewebe mit strukturierter Oberfläche besteht. Diese fünfte Schicht (7) besteht vorzugsweise aus Polyester oder Polypropylen und sie ist vorzugsweise 0,01 bis 0,05 mm, insbesondere 0,025 mm oder 0,036 mm dick.

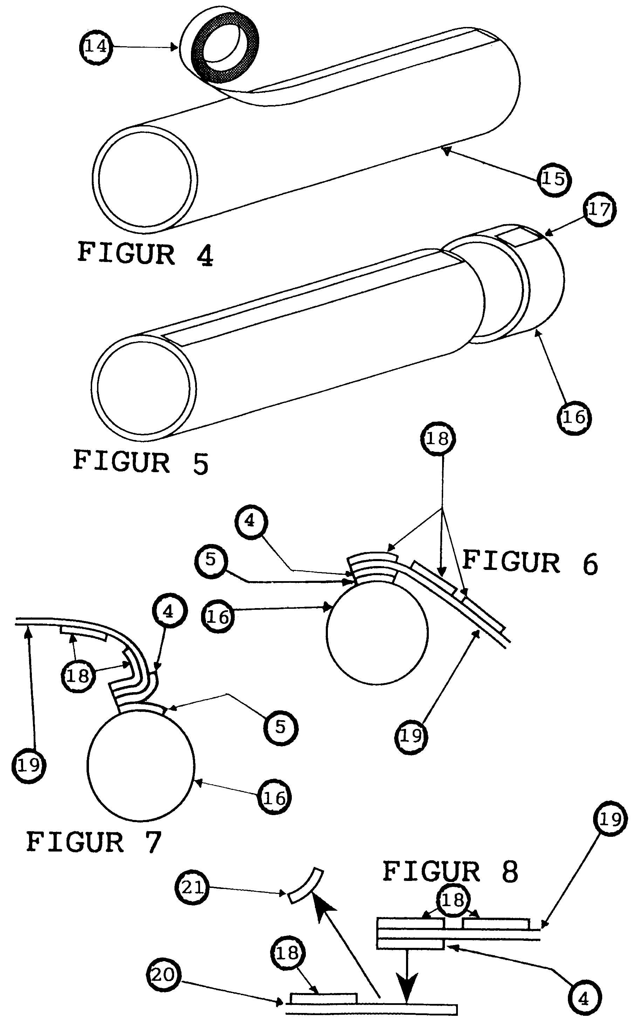

Die Unterseite der erwähnten, fünften Schicht (7) ist mit einer untersten, sechsten Schicht (8) beschichtet, welche sechste Schicht (8) aus einem nach dem Stand der Technik üblichen, permanent haftenden Klebstoff auf, z.B., Acrylat- oder Kautschukbasis besteht. Bezüglich der Zusammensetzung dieser sechsten Schicht (8) wird auf die im Zusammenhang mit der Zusammensetzung der ersten Schicht (1) gemachten Ausführungen verwiesen. Diese sechste Schicht (8) kann unmittelbar auf dem Rollenkern (15) einer Etikettenbandrolle für vollautomatische Etikettiermaschinen fixiert werden. Figur 4 zeigt diesen Vorgang anhand einer bevorzugten Ausführungsform (14) der Erfindung in Rollenform.

Im Rahmen einer bevorzugten Ausführungsform kann zum Zweck einer Erleichterung der Lagerung und des Transportes der Erfindung die Oberseite der ersten Schicht (1) mit einer Schutzschicht aus einer Papierlage (9) versehen sein, die doppelseitig eine dehäsive Silikonbeschichtung (10, 11) aufweist und welche Schutzschicht vor der Verwendung der Erfindung abgezogen werden muß. Da die Erfindung vorzugsweise in Rollenform gefertigt wird (vgl. (14) in Figur 4), dient die obere Silikonbeschichtung (10) gleichzeitig zur Abdeckung der untersten Schicht (8), die aus einem permanent haftenden Klebstoff besteht.

Im Rahmen einer weiteren, bevorzugten Ausführungsform kann die Oberseite der obersten, ersten Schicht (1) (vgl.: Fig. 2) und die Unterseite der untersten, sechsten Schicht (8) (vgl.: Fig. 3) der Erfindung jeweils mit einer Papierlage (12, 12a) versehen sein, die jeweils einseitig mit einer derartigen dehäsiven Silikonschicht versehen ist (13, 13a), welche dehäsiven Schichten an die Oberseite der ersten Schicht (1), bzw. an die Unterseite der sechsten Schicht (8) der Erfindung jeweils unmittelbar anschließen. Vor der Verwendung der Erfindung sind die Papierlagen (12) und (12a), die lediglich Lagerung und Transport, bzw. Verarbeitung der Erfindung erleichtern sollen, ebenfalls abzuziehen.

Die Dicke der verschiedenen Einzelschichten ist für die Erfindung vollkommen unwesentlich und wird somit keinen besonderen Einschränkungen unterworfen.

Wie anhand der Figuren 4 bis 6 ersichtlich, wird die Erfindung (14, 17)nach der Entfernung der vorstehend erwähnten, eventuell vorhandenen Papierschicht(en), die zur Abdeckung des permanent haftenden Klebstoffes der ersten und der sechsten Schicht dient/(en), mit der Unterseite der sechsten Schicht (8) auf dem Rollenkern (15, 16) und mit der Oberseite der ersten Schicht auf der adhäsiven Unterseite eines mit selbstklebenden Haftetiketten (18) beschichteten oder noch zu beschichtenden Etikettenbandes (19) fixiert, ehe das Band auf den Rollenkern gewickelt wird. Diese Rollenkerne (15) werden in der Regel in Standardlängen gefertigt, die vom Etikettenformat unabhängig sind. Dabei ist es vorteilhaft, entsprechend der Figur 4 die Erfindung (14) über die gesamte Länge dieser Rollenkerne (15) aufzukleben und anschließend den Rollenkern (15) zusammen mit der Erfindung (14) im Rahmen der Etikettenherstellung auf die Etikettenbandbreite zu vereinzeln (vgl. (16, 17)) in der Figur 5). Zur anschließenden Fixierung des Etikettenbandendes wird die Schutzschicht (9) der oberen Schicht (1) abgezogen und die Unterseite des Etikettenbandes so aufgeklebt, daß die Endkante des letzten Etiketts, die Trägerbandendkante und die Kante der Erfindung bündig und randscharf übereinander liegen (vgl. hierzu Figur 6, welche zur Vereinfachung die auf dem Rollenkern (16) fixierte Erfindung lediglich schematisch anhand der dritten (4) und vierten Schicht (5) in einer Seitenansicht wiedergibt). Die Randzonen (3, 6) müssen dabei gleichsinnig zur Wickelrichtung des Etikettenbandes liegen.
Das Band wird in dieser Form in die Etikettiermaschine eingesetzt und verarbeitet, wobei, sobald unmittelbar vor dem vollständigen Abwickeln des Etikettenbandes das am Rollenkern (16) fixierte Ende des Bandes (19) erreicht wird (vgl. Figur 7), eine sofortige Ablösung der Unterseite der dritten, aus Spezialsilikonklebstoff bestehenden Schicht (4) von der Oberseite der silikonklebstoffabweisenden, vierten Schicht (5) stattfindet und der Ablösungsvorgang von jenem erwähnten, nicht durch die dritte Schicht ausgefüllten Flächenanteil der Oberseite der vierten Schicht (5) ausgeht, der als "Sollbruchstelle" dient und der sich innerhalb jener Randzone der Erfindung befindet, die zur Wickelrichtung des Etikettenbandes gleichsinnig orientiert ist. Sobald die Etikettiermaschine angehalten und ein neues Etikettenband (20) eingesetzt worden ist, kann, wie im Rahmen der Figur 8 schematisch gezeigt, die durch die Ablösung von der Oberseite der vierten Schicht (5) freigelegte, aus Spezialsilikonklebstoff bestehende, dritte Schicht (4) der Erfindung lückenlos mit der dehäsiven Oberseite des neu in die Maschine eingesetzten Etikettenbandes (20) verbunden werden, ohne daß dadurch ein (potentieller) Banddefekt provoziert wird. Dies gelingt, indem das erste Etikett (21) des neuen Etikettenbandes (20) vom Trägerband abgezogen und an dessen Position die freigelegte, dritte Schicht (4) aus einem Spezialklebstoff für silikonbeschichtete Flächen aufgeklebt wird, wobei die Endkante des (nahezu) verbrauchten Etikettenbandes (19) und das zweite Etikett des neuen Etikettenbandes (20) einen Abstand voneinander aufweisen, der näherungsweise dem Abstand zweier aufeinanderfolgender Etiketten auf dem Etikettenband entspricht, d.h., vorzugsweise beträgt dieser Abstand 1 bis 3 mm. Dadurch wird eine den Transport der Klebestelle durch die vollautomatische Etikettiermaschine nicht störende, aber gleichwohl die beiden Etikettenbandenden zuverlässig fixierende, überlappende Verbindung der beiden Etikettenbänder (19, 20) erreicht. Insbesondere wird es ferner überflüssig, das neu eingesetzte Etikettenband (20) von Hand nachzujustieren, was sowohl dem möglichen Verlust einer größeren Anzahl Etiketten (18) als auch der Auslösung längerer Maschinenausfallzeiten wirksam vorbeugt. Unmittelbar nach der Verbindung der beiden Etikettenbänder (19, 20) kann die Etikettiermaschine mit voller Etikettierleistung weiterbetrieben werden.

## Patentansprüche

1. Verbundklebeband zum lückenlosen Verbinden von Etikettenbändern,
**dadurch gekennzeichnet**,
daß das Verbundklebeband sechs übereinander angeordnete Schichten aufweist, und zwar
eine oberste, erste Schicht (1), die aus einem permanent haftenden Klebstoff besteht,
eine zweite Schicht (2), die aus einer transparenten Folie aus einem üblichen Gebrauchskunststoff besteht,
eine dritte Schicht (4), die aus einem Spezialklebstoff für silikonbeschichtete Flächen besteht,
eine vierte Schicht (5), die aus einem silikonklebstoffabweisenden Material besteht,
eine fünfte Schicht (7), die aus einer transparenten oder weißen Folie aus einem üblichen Gebrauchskunststoff oder einem Papier oder einem Gewebe mit strukturierter Oberfläche besteht,
eine unterste, sechste Schicht (8), die aus einem permanent haftenden Klebstoff besteht,
wobei die dritte Schicht (4) mit ihrer Oberseite an einen größeren Flächenbereich der Unterseite der zweiten Schicht (2) mit Ausnahme einer Randzone (3) und mit ihrer Unterseite an einen entsprechenden, größeren Flächenbereich der Oberseite der vierten Schicht (5) mit Ausnahme einer Randzone (6) anschließt, so daß jeweils eine Randzone (3) der Unterseite der zweiten Schicht (2) und eine darunter angeordnete, entsprechende Randzone (6) der Oberseite der vierten Schicht (5) nicht von der dritten Schicht (4) bedeckt wird.

2. Verbundklebeband nach Anspruch 1, dadurch gekennzeichnet, daß die Randzone (3) und/oder die Randzone (6) dadurch gebildet sind, daß eine entsprechende Randfläche der zweiten Schicht (2) und/oder der vierten Schicht (5) mittels einer geeigneten Abdeckung kaschiert ist/sind.

3. Verbundklebeband nach Anspruch 1 oder 2, dadurch gekennzeichnet, daß die erste Schicht (1) und/oder die sechste Schicht (8) aus einem Klebstoff auf Acrylat- oder Kautschukbasis bestehen/besteht.

4. Verbundklebeband nach einem der vorhergehenden Ansprüche, dadurch gekennzeichnet, daß die zweite Schicht (2) aus einer Polyester- oder Polypropylenfolie besteht.

5. Verbundklebeband nach einem der vorhergehenden Ansprüche, dadurch gekennzeichnet, daß die fünfte Schicht (7) aus einer Polyester- oder Polypropylenfolie besteht.

6. Verbundklebeband nach einem der vorhergehenden Ansprüche, dadurch gekennzeichnet, daß die zweite Schicht (2) und/oder die fünfte Schicht (7) eine Dicke von 0.01 bis 0.05 mm, vorzugsweise von 0,025 mm oder 0,036 mm aufweisen/aufweist.

7. Verbundklebeband nach einem der vorhergehenden Ansprüche, dadurch gekennzeichnet, daß die dritte Schicht (4) aus einem Klebstoff auf Polysiloxanbasis, vorzugsweise auf der Basis von Polydimethylsiloxan und/oder Polydiphenylsiloxan, insbesondere auf der Basis von Polydimethylsiloxan besteht.

8. Verbundklebeband nach einem der vorhergehenden Ansprüche, dadurch gekennzeichnet, daß die vierte Schicht (5) aus einem silikonklebstoffabweisenden oder einem leicht von Silikonklebstoff trennbaren Material besteht oder dieses umfasst und/oder eine silikonklebstoffabweisende oder eine leicht von Silikonklebtoff trennbare, strukturierte Oberfläche aufweist.

9. Verbundklebeband nach einem der vorhergehenden Ansprüche, dadurch gekennzeichnet, daß die vierte Schicht (5) aus einem silikonklebstoffabweisenden Material auf der Basis von Polydimethylsiloxan und/oder Polydiphenylsiloxan, insbesondere auf der Basis von Polydimethylsiloxan besteht oder dieses umfasst.

10. Verbundklebeband nach einem der Ansprüche 1 bis 9, dadurch gekennzeichnet, daß die Oberseite der ersten Schicht (1) mit einem Papier (9) versehen ist, welches Papier doppelseitig eine dehäsive Silikonbeschichtung (10, 11) aufweist.

11. Verbundklebeband nach einem der Ansprüche 1 bis 9, dadurch gekennzeichnet, daß die Oberseite der ersten Schicht (1) und die Unterseite der sechsten Schicht (8) der Neuerung jeweils mit einem Papier (12, 12a) versehen sind, welches Papier jeweils einseitig mit einer dehäsiven Silikonbeschichtung versehen ist (13, 13a) und wobei die dehäsiven Beschichtungen (13, 13a) an die Oberseite der ersten Schicht (1), bzw. an die Unterseite der sechsten Schicht (8) der Neuerung jeweils unmittelbar anschließen.
